# EUROPÄISCHE PATENTSCHRIFT

(11) **EP 2 759 729 B1**
(45) Veröffentlichungstag und Bekanntmachung des Hinweises auf die Patenterteilung: **30.05.2018**
(21) Anmeldenummer: 13197904.9
(22) Anmeldetag: 18.12.2013
(51) Int. Cl.: F16C 33/64, F16C 33/30, F16C 33/56, F16C 33/62, C21D 9/40, F16C 19/36

(54) **Verfahren zur Herstellung eines Wälzlagers und Wälzlager**
Method for manufacturing a roller bearing and roller bearing
Procédé de fabrication d'un palier à roulement et palier à roulement

(30) Priorität: 28.01.2013 DE 102013201321
(43) Veröffentlichungstag der Anmeldung: 30.07.2014
(73) Patentinhaber: Aktiebolaget SKF, 415 50 Göteborg (SE)
(72) Erfinder: Gegner, Jürgen, 91301 Forchheim (DE); Nierlich, Wolfgang, 97424 Schweinfurt (DE); Olschewski, Armin, 97422 Schweinfurt (DE); Stubenrauch, Arno, 97491 Aidhausen (DE)
(74) Vertreter: Kuhstrebe, Jochen

(56) Entgegenhaltungen:
- EP-A1- 1 505 306
- EP-B1- 1 331 211
- WO-A2-2009/065515
- DE-A1-102011 006 296
- DE-U1-202008 017 091
- US-A- 6 048 414
- US-A1- 2013 016 938

## Beschreibung

Die Erfindung betrifft ein Verfahren zur Herstellung eines Wälzlagers. Weiterhin betrifft die Erfindung ein Wälzlager.

Insbesondere bei Wälzlagern, die komplexen Belastungsmustern ausgesetzt sind, wie beispielsweise bei Wälzlagern in Industriegetrieben von Windenergieanlagen, Kränen oder Mühlen sowie etwa Papiermaschinen und Schiffswendegetrieben, kommt es immer wieder zu vorzeitigen Ausfällen z. B. bereits zwischen 1% und 25% der nominellen *L*₁₀-Lebensdauer (bezogen auf 90% Überlebenswahrscheinlichkeit). Angesichts der hohen Kosten der Wälzlager selbst (meist größere Rollenlager), der Reparaturkosten (z. B. Offshore-Windturbinen) und der hohen Kosten, die durch einen Stillstand der mit derartigen Wälzlagern ausgerüsteten Anlagen verursacht werden, ist jedoch ein langer störungsfreier Betrieb und somit eine lange Lebensdauer der Wälzlager für den wirtschaftlichen Betrieb dringend gefordert. Es ist daher erforderlich, die Wälzlager mit herausragenden und - soweit diese bekannt sind - auf die erwarteten Beanspruchungsprofile maßgeschneidert abgestimmten Werkstoffeigenschaften auszustatten.

Aus der US6 048 414 A sind Wälzlager bekannt, die bei Geräten für Informationssysteme, insbesondere bei Festplatten eingesetzt werden können. Die WO 2009/065515 A2 offenbart ein Laufbahnelement einer Wälzlagerung, das in einem Tiefenbereich unter der Oberfläche einer Abrollbahn Druckeigenspannungen in Höhe von mindestens ca. 400 MPa aufweist.

Der Erfindung liegt die Aufgabe zugrunde, ein Wälzlager bereitzustellen, das auch bei einem Betrieb, in dem extreme Beanspruchungssituationen auftreten, eine sehr lange Lebensdauer und ein sehr geringes Risiko eines vorzeitigen Ausfalls aufweist.

Diese Aufgabe wird durch ein Verfahren zur Herstellung eines Wälzlagers und durch ein Wälzlager gemäß den nebengeordneten Ansprüchen gelöst.

Beim erfindungsgemäßen Verfahren zur Herstellung eines Wälzlagers, das einen Innenring mit einer Innenringlaufbahn, einen Außenring mit einer Außenringlaufbahn und Wälzkörper aufweist, die auf der Innenringlaufbahn und auf der Außenringlaufbahn abrollen, wird folgendermaßen vorgegangen:
Der Innenring wird aus Stahl hergestellt und einer der Härtung dienenden Wärmebehandlung unterzogen, die mit der Durchführung eines letzten Wärmebehandlungsschrittes bei einer vorgegebenen Temperatur abgeschlossen wird. Mindestens im Innenring werden durch Kaltverfestigen im Bereich der Innenringlaufbahn Druckeigenspannungen in einer Randschicht, die sich bis in eine Mindesttiefe unter der Oberfläche der Innenringlaufbahn erstreckt, ausgebildet. Nach dem Kaltverfestigen wird der Innenring brüniert. Die Wälzkörper werden aus einem Keramikmaterial hergestellt.

Die einzelnen Schritte des erfindungsgemäßen Verfahrens werden vorzugsweise in der vorstehend genannten Reihenfolge durchgeführt, soweit sie dieselbe Komponente des Wälzlagers betreffen. Dabei müssen nicht alle Schritte zwingend in einem engen räumlichen oder zeitlichen Zusammenhang ausgeführt werden. Es besteht vielmehr die Möglichkeit, Zwischenprodukte zu fertigen, die zu einem späteren Zeitpunkt und/oder an einem anderen Ort weiter bearbeitet werden.

Durch das erfindungsgemäße Herstellungsverfahren wird die Empfindlichkeit des für den Innenring verwendeten Stahls gegen Rissbildung an der Oberfläche vermindert und durch die Druckeigenspannungen auch das Eindringen von Wasserstoff in die Innenringlaufbahn erschwert. Außerdem wird die Masse der Wälzkörper gegenüber üblichen Wälzkörpern aus Stahl reduziert, wodurch das tribologische und mechanische Verhalten, z. B. verminderte Reibung und damit auch niedrigere Energieverluste, bessere Notlaufeigenschaften, geringere Zentrifugalkräfte, verbessert wird. Insbesondere kann das Risiko eines direkten Werkstoffkontakts zwischen den Wälzkörpern und der Innenringlaufbahn ohne trennenden Schmierfilm (z. B. Mischreibungszustände) reduziert und es können die negativen Auswirkungen eines solchen direkten Kontakts abgemildert werden. Außerdem wird verhindert, dass es zu einem Stahl-Stahl-Kontakt kommt.

Dies wirkt sich insbesondere bei Oberflächenbeanspruchung (z. B. auch bei verschmutztem Schmierstoff) positiv auf die Lebensdauer des Wälzlagers aus. Demgemäß hat das erfindungsgemäße Verfahren den Vorteil, dass es die Herstellung von Wälzlagern ermöglicht, die auch dann eine sehr lange Lebensdauer erreichen, wenn sie beispielsweise kurzzeitig extremen Betriebsbedingungen, z. B. charakterisiert durch hohe Hertz'sche Pressungen und Gleitanteile, ausgesetzt sind. Somit eignet sich das erfindungsgemäße Verfahren beispielsweise für die Herstellung von Wälzlagern für Getriebe von Windenergieanlagen. Mit der Wärmebehandlung kann die Ausbildung gewünschter Einsatzgefüge im Innenring erzielt werden. Durch das Härten wird die Innenringlaufbahn zuverlässig vor einer mechanischen Beschädigung und vor einem unzulässig hohen Verschleiß geschützt.

Der Innenring kann vor dem Kaltverfestigen einer Martensit-, Einsatz- oder Induktionshärtung unterzogen werden. In diesem Fall kann es sich bei der Temperatur des letzten Wärmebehandlungsschrittes um die Anlasstemperatur des Innenrings handeln.

Ebenso kann der Innenring vor dem Kaltverfestigen einer Bainithärtung unterzogen werden. In diesem Fall kann es sich bei der Temperatur des letzten Wärmebehandlungsschrittes um die Bainitumwandlungstemperatur des Innenrings handeln.

Zwischen dem Bearbeitungsschritt des Kaltverfestigens und dem Bearbeitungsschritt des Brünierens kann eine mechanische Oberflächennachbearbeitung des Innenrings durchgeführt werden. Dadurch können geschädigte Oberflächenbereiche des Innenrings abgetragen werden und/oder die Oberflächenrauhigkeit reduziert werden. Die Oberflächennachbearbeitung kann z. B. durch Honen erfolgen. Eine Oberflächennachbearbeitung durch (Fein-) Schleifen kommt nur dann in Betracht, wenn der Abtrag so gering ist, dass die durch das Kaltverfestigen erzielten Effekte nicht unzulässig stark beeinträchtigt werden.

Der Innenring kann einer thermischen Nachbehandlung unterzogen werden. Insbesondere kann die thermische Nachbehandlung bei einer Temperatur unterhalb der Temperatur des letzten Wärmebehandlungsschrittes vorgenommen werden. Dies hat den Vorteil, dass es zu keinem signifikanten Härteverlust kommt. Die thermische Nachbehandlung kann nach dem Brünieren des Innenrings durchgeführt werden.

Weiterhin kann der Außenring einer der Härtung dienenden Wärmebehandlung mit einem letzten Wärmebehandlungsschritt, einem Kaltverfestigen, einer Brünierbehandlung und/oder einer thermischen Nachbehandlung bevorzugt bei einer Temperatur unterhalb der Temperatur des letzten Wärmebehandlungsschrittes unterzogen werden. Dabei kann das gleiche Wärmebehandlungsverfahren wie beim Innenring zum Einsatz kommen. Ebenso kann auch ein von der Wärmebehandlung des Innenrings abweichendes Verfahren eingesetzt werden.

Die Temperatur der thermischen Nachbehandlung kann jeweils wenigstens 10 K unter der Temperatur des letzten Wärmebehandlungsschrittes liegen. Die thermische Nachbehandlung kann bei einer Temperatur von wenigstens 100 °C durchgeführt werden. Besonders effektiv ist die Wirkung der thermischen Nachbehandlung, wenn diese bei einer Temperatur durchgeführt wird, die maximal 100 K, insbesondere maximal 50 K, unter der Temperatur des letzten Wärmebehandlungsschrittes liegt. Als ein Maß für die Wirksamkeit der thermischen Nachbehandlung kann die Abnahme der röntgenografischen Linienbreite herangezogen werden. Beispielsweise kann für die Halbwertsbreite der {211}-Ferrit (Martensit/Bainit) Röntgenbeugungslinie eine Absenkung um mindestens 0,05° an mindestens einem Ort innerhalb der mechanisch beeinflussten Zone (Oberfläche und/oder Tiefe) als Richtwert für eine wirksame thermische Nachbehandlung dienen.

Die thermische Nachbehandlung erfolgt vorzugsweise möglichst knapp unterhalb der Anlasstemperatur (z. B. 5 bis 20 K darunter) für eine von der Bauteildicke und der Dicke der mechanisch beeinflussten Randschicht abhängige, nicht zu lange Zeit von beispielsweise maximal 5 Stunden, um ohne nennenswerten Härteverlust und Druckeigenspannungsabbau die Stabilisierung des nach der Wärmebehandlung durch Oberflächenbearbeitung und Kaltverfestigen mechanisch beeinflusste Mikrostruktur zu optimieren. Erfahrungsgemäß liegt eine ausreichende Zeit für die thermische Nachbehandlung, die auch von der Temperatur abhängt, bei 15 Minuten bis maximal 2 Stunden. Wird statt eines Martensit-, Einsatz- oder Induktionshärten ein Bainithärten durchgeführt, gelten die für die Anlasstemperatur getroffenen Aussagen für die Bainitumwandlungstemperatur entsprechend.

Wenn auch brüniert wird, kann die thermische Nachbehandlung jeweils so im Anschluss an das Brünieren durchgeführt werden, dass es zwischenzeitlich nicht zu einer nennenswerten Abkühlung kommt. Diese Bedingung kann beispielsweise dann als erfüllt angesehen werden, wenn die Temperatur der behandelten Komponente zwischen dem Brünieren und der thermischen Nachbehandlung einen Wert von 100 °C nicht unterschreitet.

Die Wälzkörper können aus Siliziumnitrid hergestellt werden. Siliziumnitrid verfügt über einer gute zyklische Beanspruchbarkeit. Ebenso kann auch Zirkonoxid zum Einsatz kommen. Insbesondere können die Wälzkörper aus polymerabgeleiteter Keramik (Polymerkeramik) hergestellt werden. Diese hat den Vorteil einer sehr guten Formbarkeit im Kunststoffzustand und vergleichsweise geringer Herstell- und Bearbeitungskosten. Bei Verwendung von Siliziumnitrid oder geeigneter Polymerkeramik kann die Masse der Wälzkörper gegenüber üblichen Wälzkörpern aus Stahl um mehr als die Hälfte reduziert werden.

Die Erfindung bezieht sich weiterhin auf ein Wälzlager, das einen Innenring mit einer Innenringlaufbahn, einen Außenring mit einer Außenringlaufbahn und Wälzkörper aufweist, die auf der Innenringlaufbahn und auf der Außenringlaufbahn abrollen. Der Innenring ist aus Stahl hergestellt und durch eine Wärmebehandlung gehärtet. Im Bereich der Innenringlaufbahn weist der Innenring in einer Randschicht, die sich bis in eine Mindesttiefe unter der Oberfläche der Innenringlaufbahn erstreckt, durch Kaltverfestigen ausgebildete Druckeigenspannungen auf. Die Oberfläche der Innenringlaufbahn ist durch eine Brünierschicht ausgebildet. Die Wälzkörper sind aus einem Keramikmaterial hergestellt.

Bei dem Keramikmaterial der Wälzkörper kann es sich um Siliziumnitrid handeln. Siliziumnitrid verfügt über einer gute zyklische Beanspruchbarkeit. Ebenso kann auch Zirkonoxid zum Einsatz kommen. Insbesondere kann das Keramikmaterial der Wälzkörper mittels einer Pyrolyse aus einer polymeren Vorstufe hergestellt sein. Geeignete Herstellungsverfahren für eine solche Polymerkeramik sind beispielsweise aus der EP1310469B1 und der EP1331211B1 bekannt und ermöglichen bei sehr guten Formgebungseigenschaften eine vergleichsweise kostengünstige Herstellung der Wälzkörper.

Bei Verwendung von Siliziumnitrid oder geeigneter Polymerkeramik kann die Masse der Wälzkörper gegenüber üblichen Wälzkörpern aus Stahl um mehr als die Hälfte reduziert werden.

Der Innenring kann aus einem Stahl mit einem Schwefelgehalt von 0,002 bis 0,015 Massen-% und/oder einem Sauerstoffgehalt kleiner 15 ppm hergestellt sein. Der Schwefelgehalt kann insbesondere zwischen 0,006 bis 0,015 Massen-% betragen. Der Sauerstoffgehalt kann insbesondere kleiner 10 ppm oder sogar kleiner 5 ppm sein. Die ppm-Angaben beziehen sich jeweils auf das Massenverhältnis. Der Innenring kann insbesondere aus einem durchhärtenden Wälzlagerstahl hergestellt sein.

Der Innenring kann einen Restaustenitgehalt von 8 bis 18 Volumen-% aufweisen. Insbesondere kann der Restaustenitgehalt von 10 bis 16 Volumen-% betragen. Ein solcher Restaustenitgehalt erweist sich gerade unter extremer Wälzbeanspruchung als günstig, da Rissbildung und -wachstum behindert werden.

Der Innenring kann im Bereich der Innenringlaufbahn in der Randschicht Druckeigenspannungen mit einem Absolutbetrag in Höhe eines Mindestwerts oder darüber aufweisen und der Mindestwert des Absolutbetrags der Druckeigenspannungen kann 200 MPa betragen. Die Mindesttiefe kann 0,1 mm, insbesondere 0,2 mm, betragen. Der Mindestwert des Absolutbetrags der Druckeigenspannungen kann insbesondere 400 MPa oder sogar 500 MPa betragen. In größeren Tiefen als der Mindesttiefe kann der Innenring Druckeigenspannungen mit einem Absolutbetrag unterhalb des Mindestwerts aufweisen. Insbesondere kann der Absolutbetrag der Druckeigenspannungen in größeren Tiefen als der Mindesttiefe mit zunehmender Tiefe abnehmen oder es können in weiter zunehmender Entfernung zur Oberfläche Zugeigenspannungen vorliegen, bis schließlich z. B. in 0,5 bis 1 mm Tiefe der Wärmebehandlungspegel (je nach Verfahren Zug- oder Druckeigenspannung) erreicht ist. Die Druckeigenspannungen haben eine reduzierte Rissneigung des Innenrings unter lokaler reibungsinduzierter Zugbeanspruchung und demgemäß eine erhöhte Betriebsdauer des Wälzlagers zur Folge.

Der Innenring kann im Bereich der Innenringlaufbahn in der Randschicht Druckeigenspannungen mit einem Absolutbetrag in Höhe eines Höchstwerts oder darunter aufweisen und der Höchstwert des Absolutbetrags der Druckeigenspannungen kann 1500 MPa betragen. Insbesondere kann der Höchstwert des Absolutbetrags der Druckeigenspannungen 1000 MPa oder lediglich 800 MPa betragen.

Der Innenring kann in der Randschicht eine mittels thermischer Nachbehandlung modifizierte Mikrostruktur aufweisen. Die modifizierte Mikrostruktur in der Randschicht des Innenrings kann Versetzungen aufweisen, um deren Kerne infolge statischer Reckalterung durch die thermische Nachbehandlung Kohlenstoffatome angelagert (segregiert) sind (vergleiche Cottrell-Wolken). Diese Modifikation stabilisiert die Mikrostruktur energetisch und kann über eine Messung der Abnahme der röntgenografischen Linienbreite nachgewiesen werden. Beispielsweise kann bei einer Absenkung der Halbwertsbreite der {211}-Ferrit (Martensit/Bainit) Röntgenbeugungslinie um mindestens 0,05° an mindestens einem Ort innerhalb der Randschicht von einer signifikanten Modifikation der Mikrostruktur ausgegangen werden.

Der Außenring kann brüniert sein.

Das Wälzlager kann einen Käfig aus einem Hochtemperatur-Kunststoff aufweisen. Insbesondere kann das Wälzlager einen Käfig aus Polyetheretherketon (PEEK) aufweisen.

Bei dem Wälzlager kann es sich insbesondere um ein Wälzlager eines Getriebes einer Windenergieanlage oder eines anderen Industriegetriebes handeln.

Die Erfindung wird nachstehend anhand des in der Zeichnung dargestellten Ausführungsbeispiels erläutert.

Es zeigen
- Figur 1: ein Ausführungsbeispiel eines erfindungsgemäß ausgebildeten Wälzlagers in einer schematischen Schnittdarstellung,
- Figur 2: ein Diagramm zur Veranschaulichung des Verlaufs der Druckeigenspannungen im Innenring und
- Figur 3: einen stark vergrößerten Ausschnitt des Innenrings im Bereich der Innenringlaufbahn in einer schematischen Schnittdarstellung.

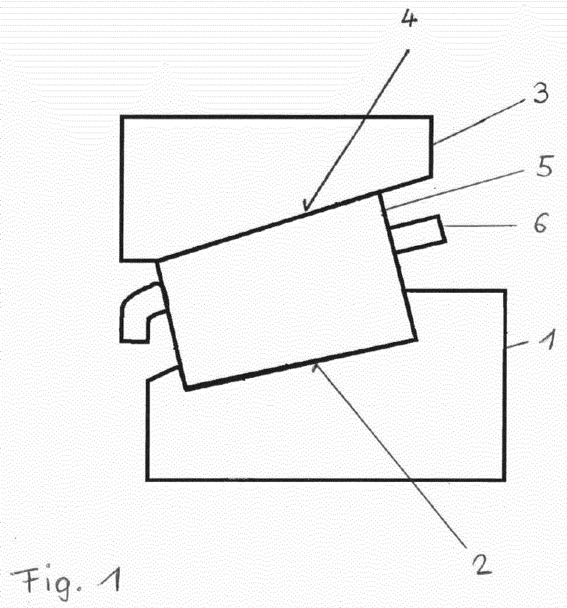

Figur 1 zeigt ein Ausführungsbeispiel eines erfindungsgemäß ausgebildeten Wälzlagers in einer schematischen Schnittdarstellung. Das dargestellte Wälzlager ist als ein Kegelrollenlager ausgebildet und weist einen Innenring 1 mit einer konischen Innenringlaufbahn 2 und einen Außenring 3 mit einer konischen Außenringlaufbahn 4 auf. Auf der Innenringlaufbahn 2 und der Außenringlaufbahn 4 rollen konische Wälzkörper 5 ab. Die Wälzkörper 5 werden in einem Käfig 6 geführt. Ein derartiges Wälzlager kann beispielsweise in einem Getriebe einer Windenergieanlage zum Einsatz kommen.

Alternativ zum dargestellten Ausführungsbeispiel kann das Wälzlager beispielsweise auch als ein Zylinderrollenlager mit zylinderförmigen Wälzkörpern 5 oder als Kugellager mit Kugeln als Wälzkörper 5 ausgebildet sein.

Der Innenring 1 des Wälzlagers kann aus einem durchhärtenden Stahl, beispielsweise aus dem Wälzlagerstahl 100Cr6 gefertigt werden. Ebenso kann der Innenring 1 aus einem Einsatzstahl, beispielsweise aus dem Stahl 18NiCrMo14-6 oder dem Stahl 18CrNiMo7-6 gefertigt werden. Der verwendete Stahl kann mit einem sehr geringen Schwefelgehalt und einem sehr geringen Sauerstoffgehalt hergestellt werden. Der Schwefelgehalt kann zwischen 0,002 und 0,015 Massen-%, insbesondere zwischen 0,006 und 0,015 Massen-%, betragen. Der Sauerstoffgehalt kann kleiner als 15 ppm, insbesondere kleiner als 10 ppm oder nach Möglichkeit sogar kleiner als 5 ppm, sein. Die ppm-Angaben beziehen sich jeweils auf das Massenverhältnis.

Der Innenring 1 wird durch eine Wärmebehandlung gehärtet. Beispielsweise wird eine Martensithärtung durchgeführt. Dabei können die Verfahrensparameter des bei der Martensithärtung durchgeführten Austenitisierens, Abschreckens und Anlassens so gewählt werden, dass sich ein Restaustenitgehalt zwischen 8 und 18 Volumen-%, insbesondere zwischen 10 und 16 Volumen-% ergibt.

Nach Abschluss der Wärmebehandlung wird der Innenring 1 einem Schleifprozess unterzogen. Im Rahmen des Schleifprozesses wird die Innenringlaufbahn 2 mit einer vorgegebenen Geometrie und einer vorgegebenen Oberflächenbeschaffenheit ausgebildet. Durch das Schleifen können beispielsweise Verzüge kompensiert werden, die durch das Härten entstanden sind. An das Schleifen kann sich auch ein Honen anschließen, um für gute tribologische Eigenschaften eine besonders glatte Oberfläche mit geringer Rauheit zu erzeugen.

In einem weiteren Arbeitsschritt erfolgt ein Kaltverfestigen des Innenrings 1 im Bereich der Innenringlaufbahn 2. Kaltverfestigen lässt sich beispielsweise durch ein Kugelstrahlen, Festwalzen und/oder Warmölstrahlen der Innenringlaufbahn 2 erreichen. Zur Beseitigung etwaiger Oberflächenschädigungen oder plastischer Verformungen kann die Innenringlaufbahn 2 im Anschluss an das Kaltverfestigen geschliffen und/oder gehont werden. Eine Oberflächennachbearbeitung durch Schleifen kommt allerdings nur dann in Betracht, wenn der Abtrag so gering eingestellt ist, dass die durch das Kaltverfestigen erzielten Effekte (insbesondere Druckeigenspannungsaufbau) nicht unzulässig stark beeinträchtigt werden. Ein Kaltverfestigen durch Festwalzen hat deutlich geringere Oberflächenschädigungen zur Folge und kann eine merklich größere Einflusstiefe erreichen als ein Kaltverfestigen durch Kugelstrahlen. Deshalb wird man in vielen Fällen dem Festwalzen oder ähnlichen Techniken gegenüber dem Kugelstrahlen den Vorzug geben. Beim Kaltverfestigen durch Festwalzen wird ein Schleifen in der Regel in nur geringem Maße oder überhaupt nicht erforderlich sein, dann allenfalls ein Honen. Andererseits lassen sich durch Kugelstrahlen beispielsweise in direkter Oberflächennähe höhere Druckeigenspannungen als durch Festwalzen erzeugen.

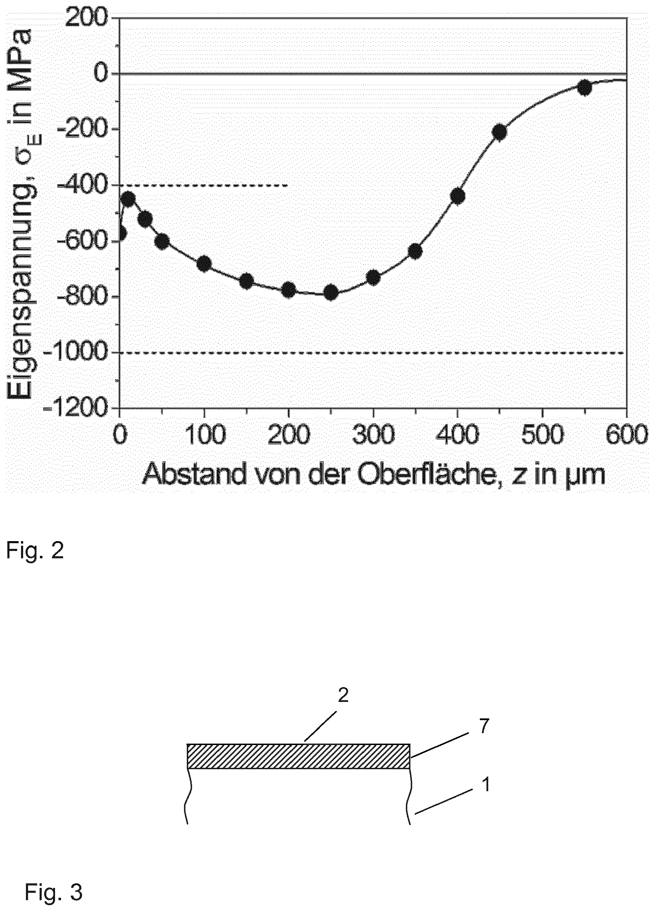

Durch das Kaltverfestigen werden im Innenring 1 in einer Randschicht insbesondere Druckeigenspannungen erzeugt, die sich sehr vorteilhaft auf die Lebensdauer des Wälzlagers auswirken. Größe und Tiefenverlauf der Druckeigenspannungen werden beispielhaft anhand von Figur 2 näher erläutert.

Figur 2 zeigt ein Diagramm zur Veranschaulichung des Verlaufs der Druckeigenspannungen im Innenring 1. Auf der Abszisse ist die Tiefe unter der Oberfläche der Innenringlaufbahn 2 aufgetragen. Auf der Ordinate ist der Wert der Eigenspannung für die jeweilige Tiefe aufgetragen. Negative Werte der Eigenspannung bedeuten, dass es sich um eine Druckeigenspannung handelt, positive Werte bedeuten, dass es sich um eine Zugeigenspannung handelt.

Die Eigenspannung weist im gesamten dargestellten Bereich, der mit der erwähnten verstärkten Randschicht gleichgesetzt werden kann, negative Werte auf, so dass es sich durchgehend um eine Druckeigenspannung handelt. An der Oberfläche der Innenringlaufbahn 2 liegt der Absolutbetrag der Druckeigenspannung geringfügig unter 600 MPa, was einen typischen Wert nach dem Honen darstellt. Mit zunehmender Tiefe nimmt der Absolutbetrag der Druckeigenspannung zunächst ab bis auf etwas über 400 MPa in einer Tiefe von ca. 0,01 mm. Mit zunehmender Tiefe nimmt der Absolutbetrag der Druckeigenspannung wieder zu und nähert sich in einer Tiefe von 0,20 mm bis 0,25 mm einem Wert von 800 MPa, ohne diesen jedoch zu erreichen. Zu noch größeren Tiefen hin nimmt der Absolutbetrag der Druckeigenspannung wieder kontinuierlich ab.

Es hat sich gezeigt, dass sich eine lange Lebensdauer des Wälzlagers erzielen lässt, wenn der Absolutbetrag der Druckeigenspannungen bis in eine Mindesttiefe einen Mindestwert nicht unterschreitet. Die Mindesttiefe sollte 0,1 mm, insbesondere 0,2 mm betragen. Der Mindestwert für den Absolutbetrag der Druckeigenspannungen sollte 200 MPa, insbesondere 400 MPa oder 500 MPa betragen. In größeren Tiefen als der Mindesttiefe kann der Innenring 1 Druckeigenspannungen mit einem Absolutbetrag unterhalb des Mindestwerts aufweisen. Insbesondere kann der Absolutbetrag der Druckeigenspannungen in größeren Tiefen als der Mindesttiefe mit zunehmender Tiefe abnehmen. Des Weiteren sollte der Absolutbetrag der Druckeigenspannungen über den gesamten Tiefenbereich einen Höchstwert nicht überschreiten. Der Höchstwert kann 1500 MPa, insbesondere 1000 MPa oder auch 800 MPa betragen.

Nach dem Kaltverfestigen und einer zur Erzielung geeigneter Rauhigkeiten eventuell notwendigen mechanischen Oberflächennachbearbeitung kann der Innenring 1 brüniert werden. Im Ausführungsbeispiel wird dies veranschaulicht. Das Brünieren kann auf eine Weise erfolgen, die in der DE-A-102007061193 beschrieben ist. Der brünierte Innenring 1 ist in Figur 3 dargestellt.

Figur 3 zeigt einen stark vergrößerten Ausschnitt des Innenrings 1 im Bereich der Innenringlaufbahn 2 in einer schematischen Schnittdarstellung.

Die Oberfläche der Innenringlaufbahn 2 wird durch eine dünne Brünierschicht 7 ausgebildet. Die Dicke der Brünierschicht 7 kann weniger als 1 µm oder bis zu einigen wenigen µm betragen. Die Brünierschicht 7 ist sehr dicht ausgebildet und weist eine tiefschwarze Farbe auf. Insbesondere ist die Brünierschicht 7 flüssigkeitsdicht ausgebildet.

Nach Kaltverfestigen und Oberflächenbearbeitung, im Ausführungsbeispiel nach optional anschließendem Brünieren, wird der Innenring 1 einer thermischen Nachbehandlung unterzogen. Die thermische Nachbehandlung wird bei einer Temperatur durchgeführt, die wenigstens 10 K unter der Anlasstemperatur des Innenrings 1 liegt, beispielsweise in einem Bereich von 150 bis 230 °C. In jedem Fall sollte eine Temperatur oberhalb 100 °C gewählt werden. Besonders effektiv ist die thermische Nachbehandlung, wenn sie bei einer Temperatur durchgeführt wird, die maximal 100 K, besser noch maximal 50 K, unter der Anlasstemperatur liegt. Die Temperatur der thermischen Nachbehandlung kann auch dichter als 10 K an die Anlasstemperatur herangeführt werden. Dann ist jedoch eine für die Wärmebehandlungspraxis relativ genaue Temperatursteuerung zu gewährleisten, um ein Überschreiten der Anlasstemperatur zu vermeiden. Durch die thermische Nachbehandlung wird erreicht, dass sich das Gefüge des Innenrings 1 mikrostrukturell stabilisiert. Dabei lagern sich Kohlenstoffatome, vergleichbar mit Cottrell-Wolken, an Versetzungen an, die während der plastischen Verformung beim Kaltverfestigen und der Oberflächenhartbearbeitung durch die dabei ausgelösten Gleitvorgänge energetisch günstige Konfigurationen (z. B. Dipole, Multipole) ausbilden, und stabilisieren so diese günstigen Versetzungsanordnungen. Die unter Wälzbeanspruchung ablaufenden Prozesse (z. B. Wälzermüdung) werden dadurch vorteilhaft beeinflusst, d. h. insbesondere in ihrer werkstoffschädigenden Wirkung verlangsamt.

Mit der Durchführung der thermischen Nachbehandlung ist der Innenring 1 fertiggestellt und kann zum Zusammenbau des Wälzlagers verwendet werden.

Anstelle einer Martensithärtung kann als Wärmebehandlung eine Bainithärtung vorgesehen sein. In diesem Fall wird die thermische Nachbehandlung bei einer Temperatur durchgeführt, die wenigstens 10 K unter der Bainitumwandlungstemperatur liegt. Das bei der Martensithärtung zu den Temperaturgrenzen Gesagte gilt analog.

Ganz allgemein kann die thermische Nachbehandlung bei einer Temperatur durchgeführt werden, die unterhalb, vorzugsweise wenigstens 10 K unterhalb, der Temperatur eines letzten Wärmebehandlungsschrittes liegt. Bei der Martensithärtung ist der letzte Wärmebehandlungsschritt das Anlassen. Demgemäß handelt es sich bei der Temperatur des letzten Wärmebehandlungsschrittes um die Anlasstemperatur. Bei der Bainithärtung ist der letzte Wärmebehandlungsschritt die Bainitumwandlung. Demgemäß handelt es sich bei der Temperatur des letzten Wärmebehandlungsschrittes um die Bainitumwandlungstemperatur.

Da der Außenring 3 geringeren Belastungen ausgesetzt ist (krümmungsbedingt niedrigere Hertz'sche Pressung), ist es nicht erforderlich, aber möglich, den Außenring 3 mit den gleichen Spezifikationen wie den Innenring 1 herzustellen. Mit anderen Worten, der Außenring 3 kann aus dem gleichen Material und in gleicher Weise hergestellt werden, wie vorstehend für den Innenring 1 beschrieben. Ebenso ist es auch möglich, für die Herstellung des Außenrings 3 einen Stahl zu verwenden, der außerhalb der für den Innenring 1 angegebenen Spezifikationen liegt. Außerdem können bei der Herstellung des Außenrings 3 ein oder mehrere Bearbeitungsschritte, die für die Herstellung des Innenrings 1 angegeben sind, weggelassen werden. Insbesondere kann der Außenring 3 einer der Härtung dienenden Wärmebehandlung mit einem letzten Wärmebehandlungsschritt, einem Kaltverfestigen, einem Brünieren und/oder einer thermischen Nachbehandlung bei einer Temperatur unterhalb der Temperatur des letzten Wärmebehandlungsschrittes unterzogen werden.

Die Wälzkörper 5 sind aus einem Keramikmaterial gefertigt. Hierfür eignen sich beispielsweise übliche durch einen Sinterprozess hergestellte Keramiken zum Beispiel auf Nitritbasis (üblich vor allem Siliziumnitrid). Weiterhin kann Oxidkeramik, speziell Zirkonoxid, verwendet werden. Ebenso ist es möglich, ein Keramikmaterial einzusetzen, das durch ein Reaktionspyrolyse-Verfahren hergestellt wird. Beispielsweise können die in der EP1310469B1 und der EP1331211B1 beschriebenen Verfahren zum Einsatz kommen. Die Keramik kann dabei eine überwiegend kristalline oder glasartige Binderphase (z. B. Siliziumoxycarbid, Siliziumoxinitrid) mit verstärkenden Siliziumcarbid- oder Aluminiumoxidpartikeln enthalten.

Der Käfig 6 kann aus einem hoch temperaturfesten Kunststoff (Hochtemperaturkunststoff) gefertigt sein. Als Hochtemperaturkunststoff kann ein Kunststoff angesehen werden, der auch bei Temperaturen über 100 °C, vorzugsweise über 150 °C noch so formstabil ist, dass die Funktionsfähigkeit des Wälzlagers nicht beeinträchtigt wird. Beispielsweise kann als Kunststoff Polyetheretherketon (PEEK) zum Einsatz kommen. Der Käfig 6 kann weiterhin z. B. aus Polyamid (z. B. PA66), Stahl (z. B. Stahlblech) oder Messing gefertigt sein.

Insbesondere auch wegen der Wälzkörper 5 aus Keramikmaterial verfügt das vorstehend beschriebene Wälzlager über herausragende Eigenschaften:
Beispielsweise bei einem Einsatz in einem Getriebe einer Windkraftanlage weist das Wälzlager eine vielfach höhere Lebensdauer als dort üblicherweise eingesetzte Vollstahl-Wälzlager auf. So ist je nach Einbaufall eine zehnfach höhere Lebensdauer durchaus erreichbar. Die hohe Lebensdauer wird durch die Kombination der Materialien und die Bearbeitungsschritte insbesondere des Innenrings 1 und der Wälzkörper 5 erreicht. Die hinsichtlich des Außenrings 3 getroffenen Maßnahmen tragen in den meisten Anwendungen in einem geringeren Maß als die Maßnahmen bei den Wälzkörpern 5 und beim Innenring 1 zur Verlängerung der Lebensdauer bei.

Das Keramikmaterial der Wälzkörper 5 zeichnet sich gegenüber üblicherweise verwendeten Stahlmaterialien durch seine erheblich geringere Dichte und damit Masse und das daraus resultierende geringere Trägheitsmoment aus. Dadurch wird die Belastung des Käfigs 6 und auch des Innenrings 1 und Außenrings 3 reduziert. Außerdem werden die Wälzkörper 5 leichter in Rotation versetzt und insbesondere Gleitbewegungen (Gleitreibung) zwischen den Wälzkörpern 5 und der Innenringlaufbahn 2 bzw. der Außenringlaufbahn 4 weitgehend vermieden. Dies wirkt sich insbesondere bei Mischreibungszuständen, wie sie in Windgetriebelagern regelmäßig auftreten, sehr günstig aus. Zu einer Reduzierung von tribologischen Werkstoffschäden durch Gleitbewegungen trägt auch der gegenüber einem Stahl-Stahl-Kontakt geringere Gleitreibungskoeffizient zwischen Keramik und Stahl bei. Gleitbewegungen haben zudem einen erheblich höheren, z. B. abrasiven oder adhäsiven Verschleiß als das gewünschte Abwälzen der Wälzkörper 5 auf der Innenringlaufbahn 2 und der Außenringlaufbahn 4 zur Folge, insbesondere dann, wenn der zwischen den Wälzkörpern 5 und Innenringlaufbahn 2 bzw. der Außenringlaufbahn 4 ausgebildete Schmierfilm unterbrochen wird (z. B. bei Mischreibung). Wenn ein direkter Kontakt zwischen den Wälzkörpern 5 und der Innenringlaufbahn 2 bzw. der Außenringlaufbahn 4 weitgehend vermieden werden kann, werden Reibung und Verschleiß erheblich reduziert. Der Vorteil z. B. für Wälzlager in Getrieben von Windenergieanlagen wird an dieser Stelle dadurch verdeutlich, dass in diesen Anwendungen Reibzugspannungen für die Rissbildung bei Frühausfällen verantwortlich sind. Weiterhin können auch ein lokales Verschweißen (adhäsiver Verschleiß, Anschmierungen) infolge eines Stahl-Stahl-Kontakts und die damit verbundenen erheblichen Oberflächenschäden vermieden werden. Bei einer Mangelschmierung kommen diese Effekte in einem besonderen Maß zum Tragen.

Durch die gegenüber Stahl reduzierte Masse der Keramikrollen wird zudem das Risiko einer Beschädigung des Innenrings 1 und des Außenrings 3 bei auftretenden (hoch-) dynamischen Belastungen reduziert.

Ein weiterer Effekt des Keramikmaterials ist eine gegenüber Wälzkörpern 5 aus Stahl reduzierte Bildung von Wasserstoff durch Zersetzung des Schmiermittels etwa bei Betrieb unter Stromdurchgang (z. B. Wälzlager in Generatoren). Eindringender Wasserstoff löst sich in der Matrix des Stahlmaterials des Innenrings 1 und des Außenrings 3, schwächt dadurch das Gefüge und fördert eine Rissbildung. Das Risiko einer Rissbildung wird insbesondere durch oberflächennahe Druckeigenspannungen erheblich reduziert.

Durch die Verwendung eines Hochtemperatur-Kunststoffs für den Käfig 6 wird ohne nennenswerte Einbußen der mechanischen Stabilität auch bei hohen Betriebstemperaturen eine gegenüber Stahl oder Messing erhebliche Reduzierung der Masse des Käfigs 6 erzielt. Dadurch werden die durch den Käfig 6 erzeugten Belastungen reduziert.

Da das Keramikmaterial der Wälzkörper 5 elektrischen Strom schlechter leitet als Stahl, kann beispielsweise eine durch Stromdurchgang hervorgerufene Zersetzung des Schmiermittels vermindert oder verhindert werden.

Die vorstehend beschriebenen Eigenschaften des erfindungsgemäßen Wälzlagers ermöglichen es deshalb auch, die Anforderungen an das verwendete Schmiermittel zu reduzieren.

### Bezugszeichenliste

- 1: Innenring
- 2: Innenringlaufbahn
- 3: Außenring
- 4: Außenringlaufbahn
- 5: Wälzkörper
- 6: Käfig
- 7: Brünierschicht

## Patentansprüche

1. Verfahren zur Herstellung eines Wälzlagers, das einen Innenring (1) mit einer Innenringlaufbahn (2), einen Außenring (3) mit einer Außenringlaufbahn (4) und Wälzkörper (5) aufweist, die auf der Innenringlaufbahn (2) und auf der Außenringlaufbahn (4) abrollen, wobei
- der Innenring (1) aus Stahl hergestellt wird,
- der Innenring (1) einer der Härtung dienenden Wärmebehandlung unterzogen wird, die mit der Durchführung eines letzten Wärmebehandlungsschrittes bei einer vorgegebenen Temperatur abgeschlossen wird,
- im Innenring (1) durch Kaltverfestigen im Bereich der Innenringlaufbahn (2) Druckeigenspannungen in einer Randschicht ausgebildet werden,
- der Innenring (1) nach dem Kaltverfestigen brüniert wird und
- die Wälzkörper (5) aus einem Keramikmaterial hergestellt werden.

2. Verfahren nach Anspruch 1, wobei der Innenring (1) vor dem Kaltverfestigen einer Martensit-, Einsatz- oder Induktionshärtung unterzogen wird und die Temperatur des letzten Wärmebehandlungsschrittes die Anlasstemperatur des Innenrings (1) ist.

3. Verfahren nach Anspruch 1, wobei der Innenring (1) vor dem Kaltverfestigen einer Bainithärtung unterzogen wird und die Temperatur des letzten Wärmebehandlungsschrittes die Bainitumwandlungstemperatur des Innenrings (1) ist.

4. Verfahren nach einem der vorhergehenden Ansprüche, wobei zwischen dem Bearbeitungsschritt des Kaltverfestigens und dem Bearbeitungsschritt des Brünierens eine mechanische Oberflächennachbearbeitung des Innenrings (1) durchgeführt wird.

5. Verfahren nach einem der vorhergehenden Ansprüche, wobei der Innenring (1) einer thermischen Nachbehandlung unterzogen wird.

6. Verfahren nach Anspruch 5, wobei die thermische Nachbehandlung bei einer Temperatur unterhalb der Temperatur des letzten Wärmebehandlungsschrittes vorgenommen wird.

7. Wälzlager, das einen Innenring (1) mit einer Innenringlaufbahn (2), einen Außenring (3) mit einer Außenringlaufbahn (4) und Wälzkörper (5) aufweist, die auf der Innenringlaufbahn (2) und auf der Außenringlaufbahn (4) abrollen, wobei
- der Innenring (1) aus Stahl hergestellt ist,
- der Innenring (1) durch eine Wärmebehandlung gehärtet ist,
- der Innenring (1) im Bereich der Innenringlaufbahn (2) in einer Randschicht, die sich bis in eine Mindesttiefe unter der Oberfläche der Innenringlaufbahn (2) erstreckt, durch Kaltverfestigen ausgebildete Druckeigenspannungen aufweist,
- die Wälzkörper (5) aus einem Keramikmaterial hergestellt sind,
**dadurch gekennzeichnet, dass**
- die Oberfläche der Innenringlaufbahn (2) durch eine Brünierschicht (7) ausgebildet ist.

8. Wälzlager nach Anspruch 7, wobei das Keramikmaterial der Wälzkörper (5) mittels einer Pyrolyse aus einer polymeren Vorstufe hergestellt ist.

9. Wälzlager nach einem der Ansprüche 7 oder 8, wobei der Innenring (1) aus einem Stahl mit einem Schwefelgehalt von 0,002 bis 0,015 Massen-% und/oder einem Sauerstoffgehalt kleiner 15 ppm hergestellt ist.

10. Wälzlager nach einem der Ansprüche 7 bis 9, wobei der Innenring (1) einen Restaustenitgehalt von 8 bis 18 Volumen-% aufweist.

11. Wälzlager nach einem der Ansprüche 7 bis 10, wobei der Innenring (1) im Bereich der Innenringlaufbahn (2) in der Randschicht Druckeigenspannungen mit einem Absolutbetrag in Höhe eines Mindestwerts oder darüber aufweist und der Mindestwert des Absolutbetrags der Druckeigenspannungen 200 MPa beträgt.

12. Wälzlager nach einem der Ansprüche 7 bis 11, wobei die Mindesttiefe 0,1 mm beträgt.

13. Wälzlager nach einem der Ansprüche 7 bis 12, wobei der Innenring (1) im Bereich der Innenringlaufbahn (2) in der Randschicht Druckeigenspannungen mit einem Absolutbetrag in Höhe eines Höchstwerts oder darunter aufweist und der Höchstwert des Absolutbetrags der Druckeigenspannungen 1500 MPa beträgt.

14. Wälzlager nach einem der Ansprüche 7 bis 13, wobei der Innenring (1) in der Randschicht eine mittels thermischer Nachbehandlung modifizierte Mikrostruktur aufweist.

15. Wälzlager nach einem der Ansprüche 7 bis 14, wobei der Außenring (3) brüniert ist.

16. Wälzlager nach einem der Ansprüche 7 bis 15, wobei das Wälzlager einen Käfig (6) aus einem Hochtemperatur-Kunststoff aufweist.

## Claims

1. Method for manufacturing a roller bearing having an inner ring (1) with an inner ring raceway (2), an outer ring (3) with an outer ring raceway (4) and rollers (5) that roll on the inner ring raceway (2) and on the outer ring raceway (4), wherein
- the inner ring (1) is made of steel,
- the inner ring (1) undergoes heat treatment serving for hardening, which ends with carrying out a final heat-treatment step at a predefined temperature,
- in the inner ring (1), compressive residual stresses are generated in a surface layer by strain hardening in the region of the inner ring raceway (2),
- the inner ring (1) is burnished after strain hardening and
- the rollers (5) are made of a ceramic material.

2. Method according to Claim 1, wherein, prior to strain hardening, the inner ring (1) undergoes martensite hardening, case-hardening or induction hardening and the temperature of the final heat-treatment step is the tempering temperature of the inner ring (1).

3. Method according to Claim 1, wherein, prior to strain hardening, the inner ring (1) undergoes austempering and the temperature of the final heat-treatment step is the bainite transformation temperature of the inner ring (1).

4. Method according to one of the preceding claims, wherein, between the processing step of strain hardening and the processing step of burnishing, a mechanical surface post-processing of the inner ring (1) is carried out.

5. Method according to one of the preceding claims, wherein the inner ring (1) undergoes thermal post-treatment.

6. Method according to Claim 5, wherein the thermal post-treatment proceeds at a temperature below the temperature of the final heat-treatment step.

7. Roller bearing having an inner ring (1) with an inner ring raceway (2), an outer ring (3) with an outer ring raceway (4) and rollers (5) that roll on the inner ring raceway (2) and on the outer ring raceway (4), wherein
- the inner ring (1) is made of steel,
- the inner ring (1) is hardened by heat treatment,
- the inner ring (1) has, in a surface layer in the region of the inner ring raceway (2), compressive residual stresses which are generated by strain hardening and extend to a minimum depth below the surface of the inner ring raceway (2),
- the rollers (5) are made of a ceramic material, **characterized in that**
- the surface of the inner ring raceway (2) is formed by a burnishing layer (7).

8. Roller bearing according to Claim 7, wherein the ceramic material of the rollers (5) is produced by pyrolysis from a polymer precursor.

9. Roller bearing according to either of Claims 7 and 8, wherein the inner ring (1) is produced from a steel having a sulphur content of 0.002 to 0.015% by mass, and/or an oxygen content of less than 15 ppm.

10. Roller bearing according to one of Claims 7 to 9, wherein the inner ring (1) has a residual austenite content of 8 to 18% by volume.

11. Roller bearing according to one of Claims 7 to 10, wherein the inner ring (1) has, in the surface layer in the region of the inner ring raceway (2), compressive residual stresses with an absolute magnitude of a minimum value or above, and the minimum value of the absolute magnitude of the compressive residual stresses is 200 MPa.

12. Roller bearing according to one of Claims 7 to 11, wherein the minimum depth is 0.1 mm.

13. Roller bearing according to one of Claims 7 to 12, wherein the inner ring (1) has, in the surface layer in the region of the inner ring raceway (2), compressive residual stresses with an absolute magnitude of a maximum value or below, and the maximum value of the absolute magnitude of the compressive residual stresses is 1500 MPa.

14. Roller bearing according to one of Claims 7 to 13, wherein the inner ring (1) has, in the surface layer, a microstructure modified by thermal post-treatment.

15. Roller bearing according to one of Claims 7 to 14, wherein the outer ring (3) is burnished.

16. Roller bearing according to one of Claims 7 to 15, wherein the roller bearing has a cage (6) made of a high-temperature synthetic material.

## Revendications

1. Procédé de fabrication d'un palier à roulement qui présente une bague intérieure (1) avec un chemin de roulement de bague intérieure (2), une bague extérieure (3) avec un chemin de roulement de bague extérieure (4) et des corps de roulement (5) qui roulent sur le chemin de roulement de bague intérieure (2) et sur le chemin de roulement de bague extérieure (4),
- la bague intérieure (1) étant fabriquée en acier,
- la bague intérieure (1) étant soumise à un traitement thermique servant au durcissement, qui se termine avec la réalisation d'une dernière étape de traitement thermique à une température prédéfinie,
- les tensions propres de compression étant réalisées dans une couche marginale dans la bague intérieure (1) par écrouissage dans la région du chemin de roulement de bague intérieure (2),
- la bague intérieure (1) étant brunie après l'écrouissage et
- les corps de roulement (5) étant fabriqués à partir d'un matériau en céramique.

2. Procédé selon la revendication 1, dans lequel la bague intérieure (1) est soumise avant l'écrouissage à un durcissement martensitique, une cémentation, ou un durcissement par induction et la température de la dernière étape de traitement thermique est la température de recuit de la bague intérieure (1).

3. Procédé selon la revendication 1, dans lequel la bague intérieure (1) est soumise, avant l'écrouis sage, à un durcissement par trempe bainitique et la température de la dernière étape de traitement thermique est la température de transformation bainitique de la bague intérieure (1).

4. Procédé selon l'une quelconque des revendications précédentes, dans lequel entre l'étape de traitement d'écrouissage et l'étape de traitement de brunissage, un post-traitement de surface mécanique de la bague intérieure (1) est réalisé.

5. Procédé selon l'une quelconque des revendications précédentes, dans lequel la bague intérieure (1) est soumise à un post-traitement thermique.

6. Procédé selon la revendication 5, dans lequel le post-traitement thermique est effectué à une température en dessous de la température de la dernière étape de traitement thermique.

7. Palier à roulement, présentant une bague intérieure (1) avec un chemin de roulement de bague intérieure (2), une bague extérieure (3) avec un chemin de roulement de bague extérieure (4) et des corps de roulement (5) qui roulent sur le chemin de roulement de bague intérieure (2) et sur le chemin de roulement de bague extérieure (4),
- la bague intérieure (1) étant fabriquée en acier,
- la bague intérieure (1) étant durcie par un traitement thermique,
- la bague intérieure (1), dans la région du chemin de roulement de bague intérieure (2), dans une couche marginale qui s'étend jusqu'à une profondeur minimale en dessous de la surface du chemin de roulement de bague intérieure (2), présentant des tensions propres de compression réalisées par écrouissage,
- les corps de roulement (5) étant fabriqués en matériau en céramique,
**caractérisé en ce que**
- la surface du chemin de roulement de bague intérieure (2) est réalisée par une couche de brunissage (7).

8. Palier à roulement selon la revendication 7, dans lequel le matériau en céramique des corps de roulement (5) est fabriqué au moyen d'une pyrolyse à partir d'un précurseur en polymère.

9. Palier à roulement selon l'une quelconque des revendications 7 ou 8, dans lequel la bague intérieure (1) est fabriquée à partir d'un acier ayant une teneur en soufre de 0,002 à 0,015 % en masse et/ou ayant une teneur en oxygène inférieure à 15 ppm.

10. Palier à roulement selon l'une quelconque des revendications 7 à 9, dans lequel la bague intérieure (1) présente une teneur en austénite résiduelle de 8 à 18 % en volume.

11. Palier à roulement selon l'une quelconque des revendications 7 à 10, dans lequel la bague intérieure (1), dans la région du chemin de roulement de bague intérieure (2) dans la couche marginale, présente des tensions propres de compression ayant une valeur absolue correspondant au moins à une valeur minimale et la valeur minimale de la valeur absolue des tensions propres de compression étant de 200 MPa.

12. Palier à roulement selon l'une quelconque des revendications 7 à 11, dans lequel la profondeur minimale est de 0,1 mm.

13. Palier à roulement selon l'une quelconque des revendications 7 à 12, dans lequel la bague intérieure (1), dans la région du chemin de roulement de bague intérieure (2) dans la couche marginale, présente des tensions propres de compression ayant une valeur absolue ne dépassant pas une valeur maximale et la valeur maximale de la valeur absolue des tensions propres de compression est de 1500 MPa.

14. Palier à roulement selon l'une quelconque des revendications 7 à 13, la bague intérieure (1), dans la couche marginale, présentant une microstructure modifiée au moyen d'un post-traitement thermique.

15. Palier à roulement selon l'une quelconque des revendications 7 à 14, dans lequel la bague extérieure (3) est brunie.

16. Palier à roulement selon l'une quelconque des revendications 7 à 15, dans lequel le palier à roulement présente une cage (6) en matière plastique résistant aux hautes températures.
